# EUROPÄISCHE PATENTSCHRIFT

(11) **EP 3 801 131 B1**
(45) Veröffentlichungstag und Bekanntmachung des Hinweises auf die Patenterteilung: **15.05.2024**
(21) Anmeldenummer: 19739928.0
(22) Anmeldetag: 01.07.2019
(51) Int. Cl.: A47B 85/04, A47B 31/06, B60N 3/00, B60N 2/32

(54) **KLAPPTISCHVORRICHTUNG**
FOLDING TABLE DEVICE
DISPOSITIF DE TABLE PLIANTE

(30) Priorität: 02.08.2018 DE 102018212962
(43) Veröffentlichungstag der Anmeldung: 14.04.2021
(73) Patentinhaber: Siemens Mobility GmbH, 81739 München (DE)
(72) Erfinder: SCHIEFER, Benno, 40233 Düsseldorf (DE)
(74) Vertreter: Siemens Patent Attorneys
(86) Internationale Anmeldenummer: PCT/EP2019/067519
(87) Internationale Veröffentlichungsnummer: WO 2020/025230

(56) Entgegenhaltungen:
- EP-A2- 0 841 210
- WO-A1-00/61901
- US-A- 2 758 633
- US-A1- 2014 346 825

## Beschreibung

Die Erfindung betrifft eine Klapptischvorrichtung mit einer Traverse zur Befestigung von einem ersten klapptischflügel und einem zweiten Klapptischflügel, die zwischen einer hochgeklappten Position und einer heruntergeklappten Position mittels einer Klappeinrichtung verlagerbar sind.

Eine solche Klapptischvorrichtung ist beispielsweise aus der DE 29503473 U1 oder aus der EP 0 841 210 A2 bekannt.

Derartige Klapptischvorrichtungen werden unter anderem in Hochgeschwindigkeits- und Pendlerzügen eingesetzt. Die Erfindung soll im Folgenden am Beispiel des Einsatzes der Klapptischvorrichtung in solchen Zügen beschrieben werden. Dabei dient die Traverse der Klapptischvorrichtung zur Befestigung von mindestens einem ersten Klapptischflügel. Der Klapptischflügel stellt in der heruntergeklappten Position eine als Tisch fungierende Ablagefläche bereit. Er dient als Ablagefläche für Gegenstände, die beispielsweise die Passagiere des Zuges mit sich führen. Der erste Klapptischflügel ist an der Traverse befestigt; die Traverse wiederum ist beispielsweise in einem Waggon eines Zuges an einem dafür vorgesehenen Platz angebracht. Es werden ein, zwei, drei, vier oder mehr Sitze für Passagiere des Zuges um die Klapptischvorrichtung herum montiert sein. Die Traverse hält den ersten Klapptischflügel in der vorgesehenen Position relativ zum Waggon und den Sitzen.

In der hochgeklappten Position ist der erste Klapptischflügel nicht mehr als Ablagefläche nutzbar; er ist aus dem Sitzbereich heraus verlagert und gibt somit Raum für die Bewegung der Passagiere frei, die den Sitz einnehmen oder verlassen möchten.

Der erste Klapptischflügel wird mittels der Klappeinrichtung von der heruntergeklappten in die hochgeklappte Position (und umgekehrt) verlagert.

Diese Klapptischvorrichtungen nehmen in Fahrgastabteilen von Zügen in der Regel viel Raum ein. Sie behindern damit insbesondere zu Stoßzeiten im Passagieraufkommen in Zügen den ungehinderten Zugang zu einem Fahrgastsitz des Zuges. Dabei erschöpft sich ihre Funktion jedoch zugleich darin, lediglich als Ablagefläche für Gegenstände zu dienen. Bei ruckartigen Bewegungen des Zuges stellen diese Klapptischvorrichtungen insbesondere beim Aufstehen von Passagieren eine Behinderung dar; Passagiere können gegen die Klapptischvorrichtung "gestoßen" werden, da sie keine Möglichkeit haben, sich an Sitz oder Klapptischvorrichtung festzuhalten. Dies gilt ebenso für Passagiere, die neben einer solchen Klapptischvorrichtung während der Fahrt des Zuges stehen. Dabei können sich die Passagiere verletzen.

In Hochgeschwindigkeits- und Pendlerzügen werden bislang Klapptischvorrichtungen mit einer herkömmlichen Scharniermechanik eingesetzt, die in der Regel als sogenannte Doppelflügel- oder Auszugstische ausgeführt sind. Hierbei werden dann die Klapptischflügel entweder horizontal auf einander gefaltet oder horizontal bzw. unter einem 45° Winkel zur Horizontalen in ein Schubfach geschoben.

Die Aufgabe der vorliegenden Erfindung besteht mithin darin, eine Klapptischvorrichtung bereitzustellen, die eine einfache Zugänglichkeit zu den an der Klapptischvorrichtung befindlichen Sitzen ermöglicht und zugleich eine Stehhilfe für Personen bereitstellt.

Erfindungsgemäß wird eine Klapptischvorrichtung zur Verfügung gestellt, bei der der erste Klapptischflügel und der zweite Klapptischflügel in der hochgeklappten Position vertikal arretierbar sind und an einem der Traverse abgewandten ersten Ende ein Personenstützelement aufweist, wobei sich die Klappeinrichtung an einem dem ersten Ende gegenüberliegenden zweiten Ende des ersten Klapptischflügels befindet. Dies hat den Vorteil, dass sich eine bessere Zugänglichkeit zu den Sitzen ergibt, die um die Klapptischvorrichtung herum angeordnet sind. Der erste Klapptischflügel kann nämlich vollständig in einer Vertikalen (in Bezug auf eine Schwerkraftrichtung) arretiert werden. Somit gibt er den Raum vor dem Sitz frei, in dem sich Passagiere mithin freier bewegen können. Sie sind in ihren Bewegungen nicht (mehr) durch den ersten Klapptischflügel der Klapptischvorrichtung eingeschränkt. Damit hat die Klapptischvorrichtung einen positiven Einfluss auf die Passagierwechselzeiten: die Passagiere können ihre Sitze schneller einnehmen und (wieder) verlassen. Weiterhin ist ein Personenstützelement an einem der Traverse abgewandten ersten Ende des ersten Klapptischflügels angeordnet. Dieses Personenstützelement kann also in der hochgeklappten Position des ersten Klapptischflügels von Passagieren dazu verwendet werden, sich an ihm beispielsweise mit ihrer Hüfte abzustützen. Die Klapptischvorrichtung hat neben der Ablagefunktion über den ersten Klapptischflügel in der heruntergeklappten Position auch eine Funktion als Stehhilfe für Passagiere in der hochgeklappten Position. Im Falle von unvorhergesehenen Bewegungen des Zuges finden die Passagiere an dem Personenstützelement (zusätzlichen) Halt.

Es ist vorteilhaft, dass sich das Personenstützelement im Wesentlichen über eine Kantenlänge des ersten Klapptischflügels erstreckt und aus einem elastischen Material, vorzugsweise einem Kunststoff oder einer Polsterung, gebildet ist. Hier kann also das Personenstützelement über im Wesentlichen die gesamte Kantenlänge des ersten Klapptischflügels von den Passagieren genutzt werden. Insoweit wird kein Raum von der Klapptischvorrichtung verschenkt, als sie über ihre gesamte Kantenlänge sowohl in der Ablagefunktion als auch in der Funktion als Stehhilfe Verwendung finden kann. Dabei ist es grundsätzlich jedoch ebenso möglich, dass der erste Klapptischflügel in zwei Teilsegmente unterteilt ist. Diese können dann einzeln und unabhängig voneinander die Funktion des ersten Klapptischflügels wahrnehmen. Dasselbe gilt dann entsprechend für das Personenstützelement. Dieses kann sich sodann im Wesentlichen über eine Kantenlänge der jeweiligen Teilsegmente erstrecken. Der Einsatz eines "weichen" Materials wie Kunststoff oder einer Polsterung für das Personenstützelement macht dessen Benutzung durch die Passagiere angenehmer und kann Verletzungen an der Kante des ersten Klapptischflügels vorbeugen.

Auch ist vorteilhaft, dass die Traverse als eine Längstraverse ausgebildet ist, die sich im Wesentlichen parallel zu dem Personenstützelement erstreckt. Es ergibt sich eine platzsparende Bauweise. Die Traverse ragt somit sowohl in der hochgeklappten Position als auch in der heruntergeklappten Position nicht über den ersten Klapptischflügel hinaus. Sie behindert somit die Passagiere auf den Sitzen an der Klapptischvorrichtung nicht in ihren Bewegungen. Auch kann sich der erste Klapptischflügel in der heruntergeklappten Position an der Längstraverse abstützen. Die mechanische Stabilität der Klapptischvorrichtung wird verbessert.

Bei all dem ist vorteilhaft, dass die Klappeinrichtung an dem dem ersten Ende gegenüberliegenden zweiten Ende des ersten Klapptischflügels exzentrisch in Bezug auf eine Dicke des ersten Klapptischflügels auf einer der Traverse abgewandten Seite des ersten Klapptischflügels angeordnet ist.

Die Klappeinrichtung dient der Verlagerung des ersten Klapptischflügels von der heruntergeklappten Position in die hochgeklappte Position (und umgekehrt). Dabei führt der erste Klapptischflügel eine drehende Bewegung relativ zu der Traverse aus. Der Drehpunkt dieser Bewegung wird durch die Klappeinrichtung vorgegeben. Es ist in der beschriebenen Anordnung also asymmetrisch in Bezug auf die Dicke des ersten Klapptischflügels gelegen. Auch ist er sehr dicht an der Oberseite des ersten Klapptischflügels angeordnet. Hierdurch ergibt sich dann ein möglichst großer Abstützhebel für den ersten Klapptischflügel.

Darin ist von Vorteil, dass die erfindungsgemäße Klapptischvorrichtung einen zweiten Klapptischflügel aufweist, und wobei das zweite Ende des ersten Klapptischflügels und das zweite Ende des zweiten Klapptischflügels in der heruntergeklappten Position aneinander anliegen.

Der zweite Klapptischflügel weist grundsätzlich dieselben Merkmale auf wie der erste Klapptischflügel. Der erste Klapptischflügel und der zweite Klapptischflügel sind derartig benachbart auf der Traverse angeordnet, dass ihre zweiten Enden in der heruntergeklappten Position aneinander anliegen. Damit stützen sich der erste Klapptischflügel und der zweite Klapptischflügel in der heruntergeklappten Position gegenseitig an den Stirnflächen der zweiten Enden aneinander ab. In der heruntergeklappten Position resultiert mithin eine stabile Ablagefläche auf dem ersten Klapptischflügel und dem zweiten Klapptischflügel.

Insgesamt ist auch vorteilhaft, dass die Klappeinrichtung eine Führungsschiene und mindestens einen Führungsstift aufweist, die relativ zueinander bewegbar sind. Die Klappeinrichtung dient der Verlagerung des ersten Klapptischflügels (und des zweiten Klapptischflügels) von der heruntergeklappten Position in die hochgeklappte Position (und umgekehrt). Diese (drehende) Bewegung der Klapptischflügel muss in einer definierten Weise so erfolgen, dass sie einfach von den Passagieren zu veranlassen und zugleich sicher zu handhaben ist. Zu diesem Zweck wird die Bewegung des ersten Klapptischflügels (und des zweiten Klapptischflügels) mittels einer relativen Bewegung von Führungsstift und Führungsschiene zueinander geführt und begrenzt.

Dabei ist vorteilhaft, dass die Führungsschiene als ein Dreivierteilkreis-Profil ausgebildet ist, das starr mit dem ersten Klapptischflügel verbunden ist, und wobei die Klappeinrichtung mindestens zwei starr mit der Traverse verbundene Führungsstifte aufweist, um die das Dreiviertelkreis-Profil rotierbar ist.

Bei einer Bewegung des ersten Klapptischflügels (und/oder des zweiten Klapptischflügels) wird das Dreiviertelkreis-Profil an zwei Führungsstiften von einer ersten Endposition in eine zweite Endposition überführt. In diesen beiden Endpositionen liegt das Dreiviertelkreis-Profil an den Führungsstiften an. Diese begrenzen die Drehbewegung des ersten Klapptischflügels (und/oder des zweiten Klapptischflügels) zwischen der heruntergeklappten Position und der hochgeklappten Position. Die Führungsstifte erzwingen eine Rotation ohne eigentliche Drehpunktzentrierung und begrenzen gleichzeitig die Drehbewegung.

Es kann das Prinzip der Rotation hier ebenso kinematisch umgekehrt werden. In diesem Fall sind dann die zwei Führungsstifte starr mit dem ersten Klapptischflügel verbunden, wobei das Dreiviertelkreis-Profil starr mit der Traverse verbunden ist.

Alternativ ist dabei vorteilhaft, dass die Führungsschiene mit einem Viertelkreis-Profil ausgebildet ist, das starr mit dem ersten Klapptischflügel verbunden und um den starr mit der Traverse verbundenen Führungsstift rotierbar ist.

Bei einer Bewegung des ersten Klapptischflügels (und/oder des zweiten Klapptischflügels) wird das Viertelkreis-Profil an dem Führungsstift von einer ersten Endposition in eine zweite Endposition überführt. In diesen beiden Endpositionen liegt der jeweilige Endpunkt des Viertelkreis-Profiles an dem Führungsstift an. Dieser begrenzt die Drehbewegung des ersten Klapptischflügels (und/oder des zweiten Klapptischflügels) zwischen der heruntergeklappten Position und der hochgeklappten Position. In dieser Ausführungsform gibt es einen Drehpunkt und der Führungsstift hat in erster Linie eine Begrenzungsfunktion.

Auch hier kann das Prinzip der Rotation ebenso kinematisch umgekehrt werden. In diesem Fall ist dann der Führungsstift starr mit dem ersten Klapptischflügel verbunden, wobei das Viertelkreis-Profil starr mit der Traverse verbunden ist.

Alternativ ist dabei vorteilhaft, dass die Führungsschiene als ein L-Profil ausgebildet ist, das starr mit der Traverse verbunden ist und in dem zwei starr mit dem ersten Klapptischflügel verbundene Führungsstifte bewegbar angeordnet sind.

In dieser Ausführungsform ist die Führungsschiene starr mit der Traverse verbunden. Bei einer Verlagerung des ersten Klapptischflügels (und/oder des zweiten Klapptischflügels) erzeugen die Führungsstifte eine elliptische Bewegung des ersten Klapptischflügels (und/oder des zweiten Klapptischflügels). Das L-Profil begrenzt die Bewegung des ersten Klapptischflügels (und/oder des zweiten Klapptischflügels) zwischen der heruntergeklappten Position und der hochgeklappten Position.

Schließlich ist von Vorteil, dass in der hochgeklappten Position und der heruntergeklappten Position jeweils ein Führungsstift in einem Endpunkt des L-Profils und der andere Führungsstift in einem Umkehrpunkt des L-Profils angeordnet ist. Die Führungsstifte arretieren so den ersten Klapptischflügel (und/oder den zweiten Klapptischflügel) zugleich in der heruntergeklappten Position bzw. in der hochgeklappten Position.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine Klapptischvorrichtung in einer heruntergeklappten Position;
- Figur 2: die Klapptischvorrichtung in einer hochgeklappten Position;
- Figur 3: eine weitere Ansicht der Klapptischvorrichtung in der heruntergeklappten Position;
- Figur 4: eine Ausführungsformen einer Klappeinrichtung der Klapptischvorrichtung mit einem Dreiviertelkreis-Profil;
- Figur 5: eine Ausführungsform der Klappeinrichtung der Klapptischvorrichtung mit einem Viertelkreis-Profil;
- Figur 6: eine Ausführungsform der Klappeinrichtung der Klapptischvorrichtung mit einem L-Profil in der hochgeklappten Position;
- Figur 7: die Ausführungsform der Figur 6 in einer Zwischenposition;
- Figur 8: die Ausführungsform der Figur 6 in der heruntergeklappten Position.

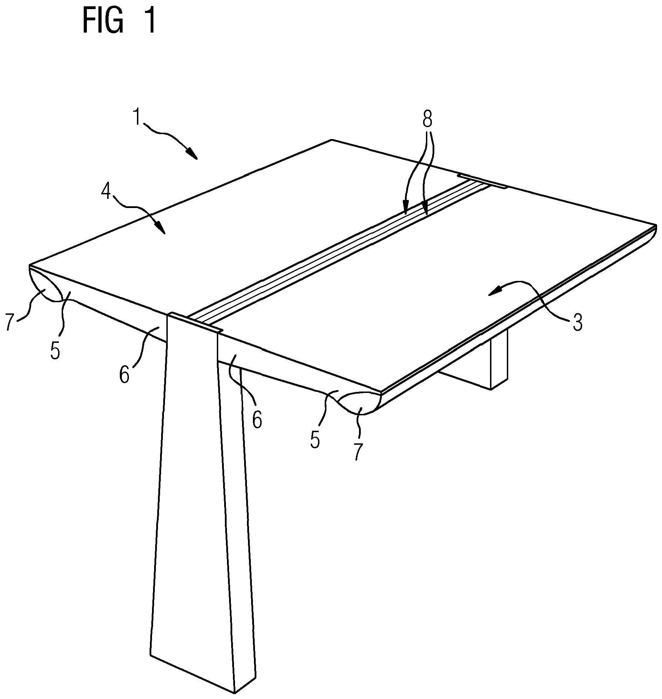

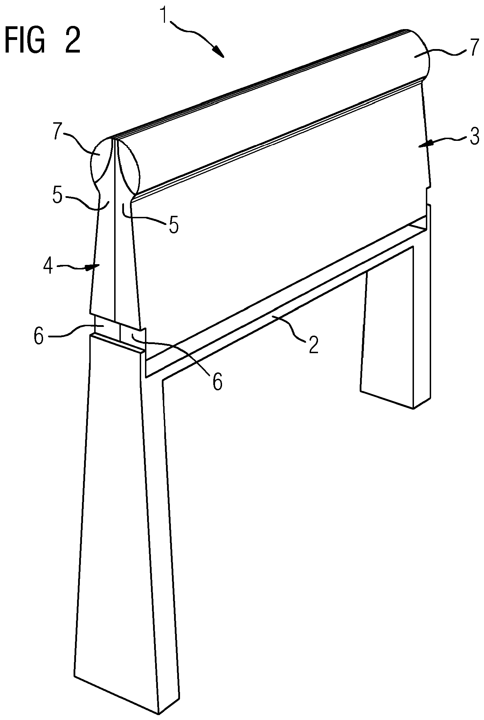

In der Figur 1 ist eine Klapptischvorrichtung 1 mit einer Traverse 2 (s. Figur 2) gezeigt. Die Klapptischvorrichtung 1 weist einen ersten Klapptischflügel 3 und einen zweiten Klapptischflügel 4 auf. Der erste Klapptischflügel 3 und der zweite Klapptischflügel 4 weisen jeweils ein erstes Ende 5 und ein zweites Ende 6 auf. An dem ersten Ende 5 ist ein Personenstützelement 7 vorgesehen. An dem zweiten Ende 6 befindet sich eine Klappeinrichtung 8.

Die Klapptischvorrichtung 1 ist in Figur 1 in einer heruntergeklappten Position gezeigt. In dieser Position erfüllt sie die Funktion, eine Ablagefläche mittels des ersten Klapptischflügels 3 und des zweiten Klapptischflügels 4 bereitzustellen. Im Bereich des ersten Endes 5 (oder im Frontbereich des ersten Endes 5) des ersten Klapptischflügels 3 und/oder des zweiten Klapptischflügels 4 können Sitze montiert werden. Beispielsweise kann die Klapptischvorrichtung 1 in einem Zug Verwendung finden.

Die Klappeinrichtung 8 dient dazu, den ersten Klapptischflügel 3 und/oder den zweiten Klapptischflügel 4 von der heruntergeklappten Position in eine hochgeklappte Position zu überführen.

In Figur 2 ist die Klapptischvorrichtung 1 mit dem ersten Klapptischflügel 3 und dem zweiten Klapptischflügel 4 in der hochgeklappten Position gezeigt.

Die Traverse 2 dient der Befestigung des ersten Klapptischflügels 3 und des zweiten Klapptischflügels 4 (beispielsweise in einem Waggon eines Zuges). Durch die parallele Ausführung wird eine platzsparende Bauweise der Klapptischvorrichtung 1 erreicht.

Auch ist in Figur 2 erkennbar, dass das Personenstützelement 7 über die gesamte Kantenlänge des ersten Klapptischflügels 3 und des zweiten Klapptischflügels 4 ausgebildet ist. Somit kann die Klapptischvorrichtung 1 im hochgeklappten Zustand als Stehhilfe für Passagiere des Zugs dienen. Diese können sich an dem Personenstützelement 7 während der Fahrt mit ihrer Hüfte abstützen. Das Personenstützelement 7 ist erfindungsgemäß halbkreisförmig um das erste Ende 5 des ersten Klapptischflügels 3 und des zweiten Klapptischflügels 4 ausgebildet. Es kann aus einem Kunststoff oder einem anderen weichen Material, wie einer Polsterung, gebildet sein.

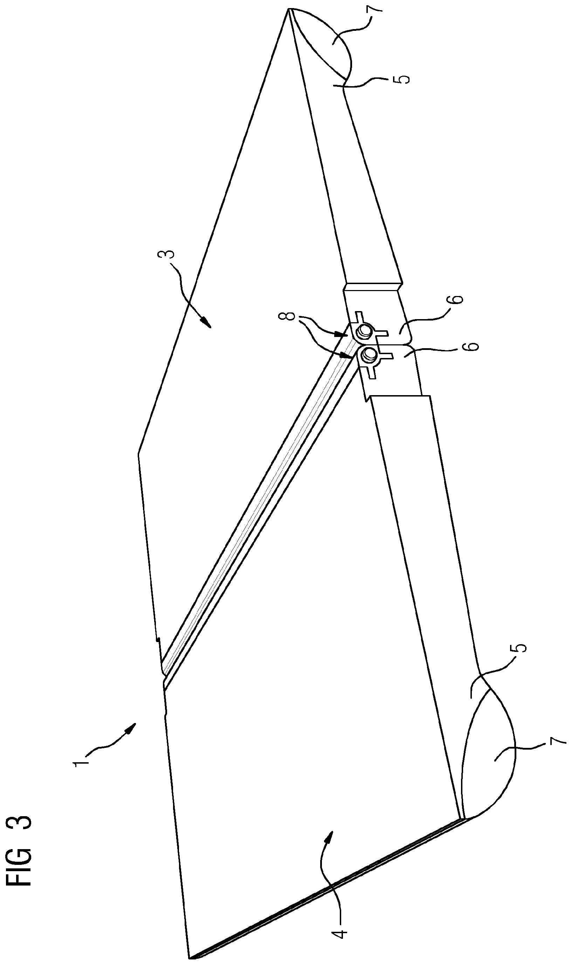

Figur 3 zeigt eine weitere Ansicht der Klapptischvorrichtung 1 mit der Klappeinrichtung 8. Hier ist insbesondere zu erkennen, dass das zweite Ende 6 des ersten Klapptischflügels 3 und das zweite Ende 6 des zweiten Klapptischflügels 4 in der heruntergeklappten Position aneinander anliegen. Es ergibt sich eine stabile Ablagefläche mittels des ersten Klapptischflügels 3 und des zweiten Klapptischflügels 4, die zuverlässig in der Horizontalen gehalten wird.

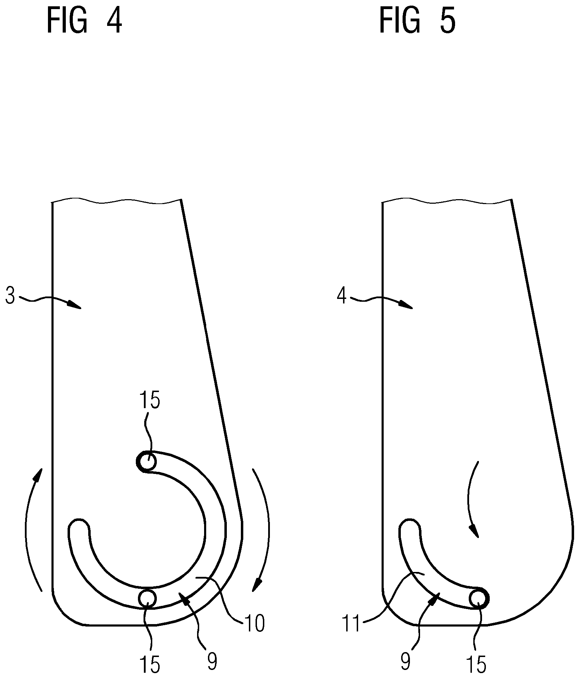

Figuren 4 und 5 veranschaulichen zwei alternative Ausführungsformen der Klappeinrichtung 8.

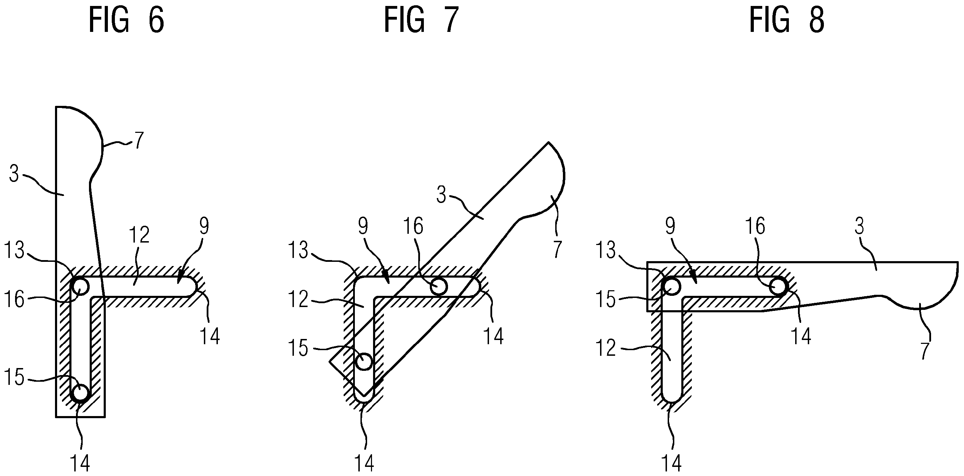

In Figur 4 ist eine erste Ausführungsform dargestellt. Darin ist eine Führungsschiene 9 vorgesehen, die als ein Dreiviertelkreis-Profil 10 ausgeführt ist. Alternativ hierzu ist in Figur 5 eine zweite Ausführungsform der Klappeinrichtung 8 dargestellt, bei der die Führungsschiene 9 als ein Viertelkreis-Profil 11 ausgeführt ist. Schließlich kann die Führungsschiene 9 in einer dritten Alternative ebenso als ein L-Profil 12 ausgebildet sein (siehe sogleich Figuren 6 bis 8). Dieses L-Profil 12 weist jeweils einen Umkehrpunkt 13 und zwei Endpunkte 14 auf (siehe sogleich Figuren 6 bis 8).

Die Ausführungsformen der Klappeinrichtung 8 nach den Figuren 4 und 5 sind wie folgt aufgebaut: In der Führungsschiene 9 ist jeweils mindestens ein Führungsstift 15 angeordnet. Die Führungsschiene 9 und der Führungsstift 15 sind relativ zueinander bewegbar. Dabei ist in dem ersten und zweiten Ausführungsbeispiel der Figuren 4 und 5 jeweils die Führungsschiene 9 starr mit dem ersten Klapptischflügel 3 bzw. dem zweiten Klapptischflügel 4 verbunden. Der Führungsstift 15 ist starr mit der Traverse 2 verbunden. Der erste Klapptischflügel 3 bzw. der zweite Klapptischflügel 4 kann solange in einer drehenden Bewegung verlagert werden, bis die mitbewegte Führungsschiene 9 an dem Führungsstift 15 zur Anlage kommt und die Bewegung begrenzt. Auf diese Weise können der erste Klapptischflügel 3 und/oder der zweite Klapptischflügel 4 von der hochgeklappten Position in die heruntergeklappte Position (und umgekehrt) verlagert werden.

Diese Verbindungen können jedoch ebenso kinematisch umgekehrt werden. Die Führungsschiene 9 ist dann starr mit der Traverse 2 verbunden. Der Führungsstift 15 ist dann starr mit dem ersten Klapptischflügel 3 bzw. dem zweiten Klapptischflügel 4 verbunden. Die Funktionsweise bleibt jeweils identisch.

In Figuren 6 bis 8 ist eine dritte alternative Ausführungsform der Klappeinrichtung 8 gezeigt. Hier ist die Führungsschiene 9 als ein L-Profil 12 ausgebildet. In einer hochgeklappten Position des ersten Klapptischflügels 3 sind dabei ein Führungsstift 15 und ein anderer Führungsstift 16 entsprechend in dem Endpunkt 14 und dem Umkehrpunkt 13 angeordnet (siehe Figur 6).

Bei einer Verlagerung des ersten Klapptischflügels 3 von der hochgeklappten Position in die heruntergeklappte Position bewegt sich der Führungsstift 15 von dem Endpunkt 14 in Richtung auf den Umkehrpunkt 13 zu; der andere Führungsstift 16 bewegt sich von dem Umkehrpunkt 13 in Richtung auf den anderen Endpunkt 14 des L-Profils 12 zu (siehe Figur 7).

In der heruntergeklappten Position befindet sich dann der Führungsstift 15 im Umkehrpunkt 13 und der andere Führungsstift 16 in dem anderen Endpunkt 14 des L-Profils (siehe Figur 8).

Insgesamt bewegt sich der erste Klapptischflügel 3 auf einer elliptischen Bahn zwischen der hochgeklappten Position und der heruntergeklappten Position. Zugleich dienen die Führungsstifte 15, 16 der Arretierung des ersten Klapptischflügels 3 in der hochgeklappten Position und in der heruntergeklappten Position.

## Patentansprüche

1. Klapptischvorrichtung (1) mit einem ersten Klapptischflügel (3) und einem zweiten Klapptischflügel (4) und mit einer Traverse (2) zur Befestigung des ersten Klapptischflügels (3) und des zweiten Klapptischflügels (4), die zwischen einer hochgeklappten Position und einer heruntergeklappten Position mittels einer Klappeinrichtung (8) verlagerbar sind, wobei der erste Klapptischflügel (3) und der zweite Klapptischflügel (4) in der hochgeklappten Position vertikal arretierbar sind und, wobei der erste Klapptischflügel (3) und der zweite Klapptischflügel (4) jeweils ein erstes Ende (5) und ein zweites Ende (6) aufweisen, und sich an dem zweiten Ende (6) die Klappeinrichtung (8) befindet,
**dadurch gekennzeichnet, dass** der erste Klapptischflügel (3) und der zweite Klapptischflügel (4) an dem der Traverse (2) abgewandten ersten Ende (5) ein Personenstützelement (7) aufweisen, wobei das Personenstützelement (7) halbkreisförmig um das erste Ende (5) des ersten Klapptischflügels (3) und des zweiten Klapptischflügels (4) ausgebildet ist.

2. Klapptischvorrichtung (1) nach Anspruch 1, **dadurch gekennzeichnet, dass** sich das Personenstützelement (7) im Wesentlichen über eine Kantenlänge des ersten Klapptischflügels (3) erstreckt und aus einem elastischen Material, vorzugsweise einem Kunststoff oder einer Polsterung, gebildet ist.

3. Klapptischvorrichtung (1) nach einem der Ansprüche 1 oder 2, **dadurch gekennzeichnet, dass** die Traverse (2) als eine Längstraverse ausgebildet ist, die sich im Wesentlichen parallel zu dem Personenstützelement (7) erstreckt.

4. Klapptischvorrichtung (1) nach einem der Ansprüche 1 bis 3, **dadurch gekennzeichnet, dass** die Klappeinrichtung (8) an dem ersten Ende (5) gegenüberliegenden zweiten Ende (6) des ersten Klapptischflügels (3) exzentrisch in Bezug auf eine Dicke des ersten Klapptischflügels (3) auf einer der Traverse (2) abgewandten Seite des ersten Klapptischflügels (3) angeordnet ist.

5. Klapptischvorrichtung (1) nach Anspruch 4, **dadurch gekennzeichnet, dass** das zweite Ende (6) des ersten Klapptischflügels (3) und das zweite Ende (6) des zweiten Klapptischflügels (4) in der heruntergeklappten Position aneinander anliegen.

6. Klapptischvorrichtung (1) nach einem der Ansprüche 1 bis 5, **dadurch gekennzeichnet, dass** die Klappeinrichtung (8) eine Führungsschiene (9) und mindestens einen Führungsstift (15) aufweist, die relativ zueinander bewegbar sind.

7. Klapptischvorrichtung (1) nach Anspruch 6, **dadurch gekennzeichnet, dass** die Führungsschiene (9) als ein Dreivierteilkreis-Profil (10) ausgebildet ist, das starr mit dem ersten Klapptischflügel (3) verbunden ist, und die Klappeinrichtung (8) mindestens zwei starr mit der Traverse (2) verbundene Führungsstifte (15, 16) aufweist, um die das Dreiviertelkreis-Profil (10) rotierbar ist.

8. Klapptischvorrichtung (1) nach Anspruch 6, **dadurch gekennzeichnet, dass** die Führungsschiene (9) als ein Viertelkreis-Profil (11) ausgebildet ist, das starr mit dem ersten Klapptischflügel (3) verbunden und um den starr mit der Traverse (2) verbundenen Führungsstift (15) rotierbar ist.

9. Klapptischvorrichtung (1) nach Anspruch 6, **dadurch gekennzeichnet, dass** die Führungsschiene (9) als ein L-Profil (12) ausgebildet ist, das starr mit der Traverse (2) verbunden ist und in dem zwei starr mit dem ersten Klapptischflügel (3) verbundene Führungsstifte (15, 16) bewegbar angeordnet sind.

10. Klapptischvorrichtung (1) nach Anspruch 9, **dadurch gekennzeichnet, dass** in der hochgeklappten Position und der heruntergeklappten Position jeweils ein Führungsstift (15, 16) in einem Endpunkt (14) des L-Profils (12) und der andere Führungsstift (16, 15) in einem Umkehrpunkt (13) des L-Profils (12) angeordnet ist.

11. Klapptisch nach einem der vorhergehenden Ansprüche, **dadurch gekennzeichnet, dass** die heruntergeklappte Position des ersten Klapptischflügels (3) einer Ablagefunktion und die hochgeklappte Position des ersten Klapptischflügels (3) einer Funktion als Stehhilfe für Passagiere entspricht

## Claims

1. Folding-table arrangement (1) having a first folding-table leaf (3) and a second folding-table leaf (4) and having a crossmember (2) for fastening the first folding-table leaf (3) and the second folding-table leaf (4), which can be displaced between a swung-up position and a swung-down position by means of a folding-action mechanism (8), wherein, in the swung-up position, the first folding-table leaf (3) and the second folding-table leaf (4) can be arrested vertically, and wherein the first folding-table leaf (3) and the second folding-table leaf (4) each have a first end (5) and a second end (6), and the folding-action mechanism (8) is located at the second end (6), **characterized in that** at the first end (5), which is directed away from the crossmember (2), the first folding-table leaf (3) and the second folding-table leaf (4) have a person-supporting element (7), wherein the person-supporting element (7) is formed in a semicircle around the first end (5) of the first folding-table leaf (3) and of the second folding-table leaf (4).

2. Folding-table arrangement (1) according to Claim 1, **characterized in that** the person-supporting element (7) extends essentially over an edge length of the first folding-table leaf (3) and is formed from an elastic material, preferably a plastic material or a padding material.

3. Folding-table arrangement (1) according to either of Claims 1 and 2, **characterized in that** the crossmember (2) is designed in the form of a longitudinal crossmember which extends essentially parallel to the person-supporting element (7).

4. Folding-table arrangement (1) according to one of Claims 1 to 3, **characterized in that** the folding-action mechanism (8) at the second end (6) of the first folding-table leaf (3), the second end being located opposite the first end (5), is arranged eccentrically in relation to a thickness of the first folding-table leaf (3) on a side of the first folding-table leaf (3) that is directed away from the crossmember (2).

5. Folding-table arrangement (1) according to Claim 4, **characterized in that**, in the swung-down position, the second end (6) of the first folding-table leaf (3) and the second end (6) of the second folding-table leaf (4) butt against one another.

6. Folding-table arrangement (1) according to one of Claims 1 to 5, **characterized in that** the folding-action mechanism (8) has a guide rail (9) and at least one guide pin (15), which are movable relative to one another.

7. Folding-table arrangement (1) according to Claim 6, **characterized in that** the guide rail (9) is designed in the form of a three-quarter-circle profile (10), which is connected rigidly to the first folding-table leaf (3), and the folding-action mechanism (8) has at least two guide pins (15, 16), which are connected rigidly to the crossmember (2) and about which the three-quarter-circle profile (10) can be rotated.

8. Folding-table arrangement (1) according to Claim 6, **characterized in that** the guide rail (9) is designed in the form of a quarter-circle profile (11), which is connected rigidly to the first folding-table leaf (3) and can be rotated about the guide pin (15), which is connected rigidly to the crossmember (2) .

9. Folding-table arrangement (1) according to Claim 6, **characterized in that** the guide rail (9) is designed in the form of an L-shaped profile (12), which is connected rigidly to the crossmember (2) and in which two guide pins (15, 16), which are connected rigidly to the first folding-table leaf (3), are arranged in a movable manner.

10. Folding-table arrangement (1) according to Claim 9, **characterized in that**, in the swung-up position and the swung-down position, a respective guide pin (15, 16) is arranged at an end point (14) of the L-shaped profile (12) and the other guide pin (16, 15) is arranged at a turning point (13) of the L-shaped profile (12).

11. Folding table according to one of the preceding claims, **characterized in that** the swung-down position of the first folding-table leaf (3) provides for a set-down function and the swung-up position of the first folding-table leaf (3) provides for a function as a standing aid for passengers.

## Revendications

1. Dispositif (1) de table pliante comprenant un premier battant (3) de table pliante et un deuxième battant (4) de table pliante et comprenant une traverse (2) pour la fixation du premier battant (3) de table pliante et du deuxième battant (4) de table pliante, qui peuvent passer entre une position rabattue en haut et une position rabattue en bas, au moyen d'un dispositif (8) de rabattement, dans lequel le premier battant (3) de table pliante et le deuxième battant (4) de table pliante peuvent être arrêtés verticalement dans la position rabattue en haut et dans lequel le premier battant (3) de table pliante et le deuxième battant (4) de table pliante ont chacun une première extrémité (5) et une deuxième extrémité (6) et le dispositif (8) de rabattement se trouve à la deuxième extrémité (6),
**caractérisé en ce que** le premier battant (3) de table pliante et le deuxième battant (4) de table pliante ont un élément (7) d'appui des personnes à la première extrémité (5) non tournée vers la traverse (2), dans lequel l'élément (7) d'appui des personnes est en forme de demi-cercle autour de la première extrémité (5) du premier battant (3) de table pliante et du deuxième battant (4) de table pliante.

2. Dispositif (1) de table pliante suivant la revendication 1, **caractérisé en ce que** l'élément (7) d'appui des personnes s'étend sensiblement sur une longueur d'arête du premier battant (3) de table pliante et est en un matériau élastique, de préférence en une matière plastique ou en un rembourrage.

3. Dispositif (1) de table pliante suivant la revendication 1 ou 2, **caractérisé en ce que** la traverse (2) est constituée sous la forme d'un longeron, qui s'étend sensiblement parallèlement à l'élément (7) d'appui des personnes.

4. Dispositif (1) de table pliante suivant l'une des revendications 1 à 3, **caractérisé en ce que** le dispositif (8) de rabattement est disposé à la deuxième extrémité (6), opposée à la première extrémité (5), du premier battant (3) de table pliante, de manière excentrée par rapport à une épaisseur du premier battant (3) de table pliante, d'un côté, loin de la traverse (2), du premier battant (3) de table pliante.

5. Dispositif (1) de table pliante suivant la revendication 4, **caractérisé en ce que** la deuxième extrémité (6) du premier battant (3) de table pliante et la deuxième extrémité (6) du deuxième battant (4) de table pliante s'appliquent l'une à l'autre dans la position rabattue vers le bas.

6. Dispositif (1) de table pliante suivant l'une des revendications 1 à 5, **caractérisé en ce que** le dispositif (8) de rabattement a un rail (9) de guidage et au moins une broche (15) de guidage, qui sont mobiles l'un par rapport à l'autre.

7. Dispositif (1) de table pliante suivant la revendication 6, **caractérisé en ce que** le rail (9) de guidage est constitué sous la forme d'un profilé (10) à trois quart de cercle, qui est solidaire du premier battant (3) de table pliante et le dispositif (8) de rabattement a au moins deux broches (15, 16) de guidage, qui sont solidaires de la traverse (2) et autour desquelles le profilé (10) à trois quart de cercle, peut tourner.

8. Dispositif (1) de table pliante suivant la revendication 6, **caractérisé en ce que** le rail (9) de guidage est constitué sous la forme d'un profilé (11) en quart de cercle, qui est solidaire du premier battant (3) de table pliante, et autour duquel la broche (15) de guidage, solidaire de la traverse (2), peut tourner.

9. Dispositif (1) de table pliante suivant la revendication 6, **caractérisé en ce que** le rail (9) de guidage est constitué sous la forme d'un profilé (12) en L, qui est solidaire de la traverse (2) et dans lequel deux broches (15, 16) de guidage, solidaire du premier battant (3) de table pliante, sont montées avec possibilité de se déplacer.

10. Dispositif (1) de table pliante suivant la revendication 9, **caractérisé en ce que** dans la position rabattue en haut et dans la position rabattue en bas, respectivement une broche (15, 16) de guidage est disposée à un point (14) d'extrémité du profilé (12) en L et l'autre broche (16, 15) de guidage au point (13) de rebroussement du profilé (12) en L.

11. Table pliante suivant l'une des revendications précédentes, **caractérisée en ce que** la position rabattue en bas du premier battant (3) de table pliante correspond à une fonction de dépôt et la position rabattue en haut du premier battant (3) de table pliante a une fonction aidant des passagers à se tenir debout.
